(19)

**Europäisches Patentamt**
**European Patent Office**
**Office européen des brevets**

(11) **EP 4 775 301 A1**

(12) **EUROPEAN PATENT APPLICATION**
published in accordance with Art. 153(4) EPC

(43) Date of publication:
**15.07.2026 Bulletin 2026/29**

(51) International Patent Classification (IPC):
**B01F 27/2322** (2022.01)    **B01F 27/1144** (2022.01)
**B01F 33/70** (2022.01)    **B29B 7/46** (2006.01)

(21) Application number: **24885618.9**

(52) Cooperative Patent Classification (CPC):
**B01F 27/1144; B01F 27/2322; B01F 33/70;
B29B 7/46**

(22) Date of filing: **25.10.2024**

(86) International application number:
**PCT/JP2024/038139**

(87) International publication number:
**WO 2025/094845 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.11.2023 JP 2023188831**

(71) Applicant: **KABUSHIKI KAISHA KOBE SEIKO
SHO (KOBE STEEL, LTD.)
Hyogo 651-8585 (JP)**

(72) Inventors:
• **HIGASHI, Kosuke**
  **Hyogo 651-2271 (JP)**
• **OKAMOTO, Sachiya**
  **Hyogo 651-2271 (JP)**
• **YAMADA, Sayaka**
  **Hyogo 651-2271 (JP)**
• **KAWASAKI, Ryota**
  **Hyogo 651-2271 (JP)**
• **TOSHIMA, Masatake**
  **Hyogo 651-2271 (JP)**
• **NISHIMURA, Makoto**
  **Hyogo 651-2271 (JP)**

(74) Representative: **TBK
Bavariaring 4-6
80336 München (DE)**

(54) **KNEADING APPARATUS**

(57)     In a rotor capable of applying high stress to a material, heat generation of the material is suppressed. A first outer peripheral part (50e) of a first rotor (50) includes a first circular arc part (51) and a first non-circular arc part (53). The first circular arc part (51) continuously extends in a circumferential direction of the first rotor (50) by 1/3 or more of a length of an entire circumference of a first virtual circle (50c). A second outer peripheral part (60e) of a second rotor (60) includes a second circular arc part (61) and a second non-circular arc part (63). The second circular arc part (61) continuously extends in a circumferential direction of the second rotor (60) by 1/3 or more of a length of an entire circumference of a second virtual circle (60c). At predetermined timing, the first non-circular arc part (53) and the second circular arc part (61) face each other in a gap (A) between a first rotation shaft (50a) and a second rotation shaft (60a).

FIG.1

## Description

## Technical Field

The present invention relates to a kneading apparatus for kneading a material.

## Background Art

For example, Patent Literature 1 recites a conventional kneading apparatus. The kneading apparatus recited in Patent Literature 1 includes a rotor having blades.

## Citation List

## Patent Literature

Patent Literature 1: JP 4542605 B2
In a case where a material is kneaded using a working fluid in a supercritical state or a subcritical state, viscosity of the material decreases as compared with a case where the material is kneaded at the atmospheric pressure. Accordingly, stress that can be applied to the material by a kneading apparatus decreases, so that dispersion of the material may be insufficient. On the other hand, when a conventional rotor capable of applying high stress to a material is used, heat generation of the material may become a problem.

## Summary of Invention

An object of the present invention is to provide a kneading apparatus capable of applying high stress to a material and suppressing heat generation of the material.
A kneading apparatus according to one aspect of the present invention includes: a kneading chamber that houses a material together with a working fluid in a supercritical state or a subcritical state in order to knead the material; a first rotor that is disposed inside the kneading chamber and rotates about a first rotation shaft; and a second rotor that is disposed inside the kneading chamber, is disposed in parallel with the first rotor and adjacent to the first rotor, and rotates about a second rotation shaft in a direction opposite to a rotation direction of the first rotor. The first rotor includes a first outer peripheral part constituting an outer peripheral part of the first rotor in a cross section of the first rotor orthogonal to a direction in which the first rotation shaft extends, the first outer peripheral part having: a first circular arc part; and a first non-circular arc part being a part of the first outer peripheral part different from the first circular arc part. When a virtual circle passing through the first circular arc part and centered on the first rotation shaft when viewed along the direction in which the first rotation shaft extends is defined as a first virtual circle, the first circular arc part has a circular arc shape centered on the first rotation shaft, is disposed on an outermost side in a radial direction of the first rotor, and continuously extends in a circumferential direction of the first rotor by 1/3 or more of a length of an entire circumference of the first virtual circle. The second rotor includes a second outer peripheral part constituting an outer peripheral part of the second rotor in a cross section of the second rotor orthogonal to a direction in which the second rotation shaft extends, the second outer peripheral part having: a second circular arc part; and a second non-circular arc part being a part of the second outer peripheral part different from the second circular arc part. When a virtual circle passing through the second circular arc part and centered on the second rotation shaft when viewed along the direction in which the second rotation shaft extends is defined as a second virtual circle, the second circular arc part has a circular arc shape centered on the second rotation shaft, is disposed on an outermost side in a radial direction of the second rotor, and continuously extends in a circumferential direction of the second rotor by 1/3 or more of a length of an entire circumference of the second virtual circle, and the first rotor and the second rotor rotate at predetermined timing such that the first non-circular arc part and the second circular arc part face each other between the first rotation shaft and the second rotation shaft.

## Brief Description of Drawings

[FIG. 1] FIG. 1 is a cross-sectional view of a kneading apparatus 1 as viewed in an axial direction Z.
[FIG. 2] FIG. 2 is a view of a first rotor 50 and a second rotor 60 viewed along the axial direction Z at a certain moment when the first rotor 50 and the second rotor 60 illustrated in FIG. 1 have opposite phases.
[FIG. 3] FIG. 3 is a view of the first rotor 50 and the second rotor 60 viewed along the axial direction Z at a certain moment when the first rotor 50 and the second rotor 60 illustrated in FIG. 1 have a normal phase.
[FIG. 4] FIG. 4 is a perspective view illustrating a rotor 40 and the like illustrated in FIG. 1.
[FIG. 5] FIG. 5 is a graph illustrating torque of the rotor 40 when the phases of the first rotor 50 and the second rotor 60 illustrated in FIG. 1 are changed.
[FIG. 6] FIG. 6 is a developed view of the first rotor 50 illustrated in FIG. 1.
[FIG. 7] FIG. 7 is a cross-sectional view of a kneading apparatus 201 according to a second embodiment as viewed in the axial direction Z.

## Description of Embodiments

(First Embodiment)

A kneading apparatus 1 according to a first embodiment will be described with reference to FIGS.

1 to 6.

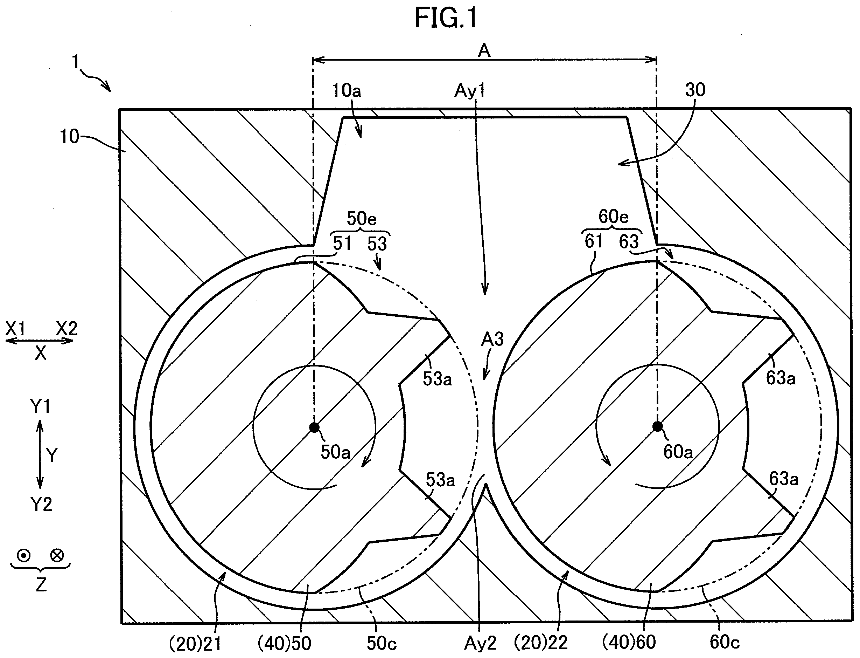

As illustrated in FIG. 1, the kneading apparatus 1 (kneader) is an apparatus that kneads a material using a working fluid in a supercritical state or a subcritical state. Hereinafter, a "supercritical state or subcritical state" is also referred to as a "supercritical state or the like". The kneading apparatus 1 is, for example, a batch type kneading apparatus. In the kneading apparatus 1, a material is kneaded in a state where a working fluid in a supercritical state or the like swells in the material, the material melts (plasticizes), and a viscosity of the material decreases.

A material kneaded in the kneading apparatus 1 includes, for example, a main material and a sub-material. The main material includes, for example, a polymer material, and specifically includes, for example, rubber (such as rubber for tires) or resin. The sub-material is an additive (compounding agent) added (compounded) to the main material. The sub-material may contain an inorganic substance or may contain an organic substance. Specifically, for example, when the main material is rubber, the sub-material is silica, a coupling agent, a vulcanizing agent, or the like.

The working fluid for use in the kneading apparatus 1 is a fluid in a supercritical state (supercritical fluid) or a fluid in a subcritical state (subcritical fluid). The kneading apparatus 1 is a supercritical kneading apparatus or a subcritical kneading apparatus. A temperature of the supercritical fluid is a temperature equal to or higher than a critical temperature (Tc), and a pressure of the supercritical fluid is a pressure equal to or higher than a critical pressure (Pc). Supercritical fluids have liquid and gas properties. The supercritical fluid has a property (solubility) to dissolve a solute similarly to a liquid and a property (diffusibility) to diffuse a solute similarly to a gas. Properties (solubility and diffusibility) of the subcritical fluid are almost the same as those of the supercritical fluid. A temperature (T) and a pressure (P) of the subcritical fluid satisfy, for example, one of the following conditions. Each unit of the temperature (T) and the critical temperature (Tc) in each of the following examples is Celsius. [Example 1 of subcritical state] $T \geq Tc$ and $P < Pc$ are satisfied. [Example 2 of subcritical state] $T < Tc$, $P < Pc$, T is sufficiently higher than normal temperature, and P is sufficiently higher than normal pressure (atmospheric pressure). [Example 3 of subcritical state] $0.5 < T/Tc < 1.0$ and $0.5 < P/Pc$ are satisfied. [Example 4 of subcritical state] $0.5 < T/Tc$ and $0.5 < P/Pc < 1.0$ are satisfied. [Example 5 of subcritical state] In a case where the critical temperature (Tc) is 0°C or less, $0.5 < P/Pc$ is satisfied.

A substance constituting the working fluid is preferably a substance that can be brought into a supercritical state or a subcritical state as easily as possible. A difference between a polarity of the working fluid and a polarity of the material is small enough to dissolve the material in the working fluid. The substance constituting the working fluid is, for example, carbon dioxide. A critical temperature (Tc) of carbon dioxide is 31°C. A critical pressure (Pc) of carbon dioxide is 7.4 MPa. Carbon dioxide is in a subcritical state when, for example, at 31°C or higher and 7.1 MPa or higher. For example, in a case of 20°C, carbon dioxide is in the subcritical state when the pressure is 15 MPa or higher. The substance constituting the working fluid need not be carbon dioxide, and may be, for example, nitrogen. The working fluid is preferably in the supercritical state rather than the subcritical state. In a case where the working fluid is in the supercritical state, materials are more easily kneaded than in a case where the working fluid is in the subcritical state.

The kneading apparatus 1 includes a chamber 10 and a plurality (pair) of rotors 40.

(Direction Related to Kneading Apparatus 1)

Directions of the kneading apparatus 1 include a lateral direction X, an up-down direction Y, and an axial direction Z. The axial direction Z is a direction in which a first rotation shaft 50a and a second rotation shaft 60a to be described later extend. The lateral direction X is a direction orthogonal to the axial direction Z, and is a direction in which a straight line passing through the first rotation shaft 50a and the second rotation shaft 60a extends when viewed along the axial direction Z. The lateral direction X may or may not be a horizontal direction unless otherwise specified. In the lateral direction X, a direction from the second rotation shaft 60a toward the first rotation shaft 50a is defined as a lateral first direction X1, and a direction opposite to the lateral first direction X1 is defined as a lateral second direction X2. The up-down direction Y is a direction orthogonal to each of the axial direction Z and the lateral direction X. The up-down direction Y may be a vertical direction, and may not be a vertical direction unless otherwise specified. One side in the up-down direction Y is defined as a downward direction Y2. As will be described later, while the first rotor 50 and the second rotor 60 rotate in opposite directions to each other, a direction of each movement of the part of the first rotor 50 in the lateral second direction X2 and the part of the second rotor 60 in the lateral first direction X1 is the downward direction Y2. In the up-down direction Y, a direction opposite to the downward direction Y2 is defined as an upward direction Y1. The upward direction Y1 may be an upward direction along the vertical direction, and may not be an upward direction along the vertical direction unless otherwise specified. A radial direction of a first virtual circle 50c to be described later and centered on the first rotation shaft 50a is referred to as a first radial direction. A circumferential direction of the first virtual circle 50c is referred to as a first circumferential direction. A radial direction of a second virtual circle 60c to be described later and centered on the second rotation shaft 60a is referred to as a second radial direction. A circumferential direction of the second virtual circle 60c is referred to as a second circumferential direction.

The chamber 10 is a container for kneading a material. The chamber 10 includes a kneading chamber 10a.

The kneading chamber 10a is a part for kneading a material. The kneading chamber 10a houses the material together with a working fluid in the supercritical state or the subcritical state in order to knead the material. The kneading chamber 10a is a part for kneading a material in the presence of a working fluid in the supercritical state (under an atmosphere) or the like. In other words, the kneading chamber 10a is disposed inside the chamber 10. The kneading chamber 10a includes a space (kneading space) for kneading a material and an inner surface of the chamber 10 that forms (surrounds) the kneading space. The kneading chamber 10a is sealed such that the working fluid in the kneading chamber 10a can maintain the supercritical state or the like. The kneading chamber 10a includes a rotor housing chamber 20 and an inter-rotor-shaft upper chamber 30.

The rotor housing chamber 20 is a part that houses the rotor 40. The rotor housing chamber 20 includes a space (rotor housing space) that houses the rotor 40 and an inner surface of the chamber 10 that forms the rotor housing space. In a case where two rotors 40 are provided, the rotor housing chamber 20 includes a first rotor housing chamber 21 and a second rotor housing chamber 22.

The first rotor housing chamber 21 houses the first rotor 50. The first rotor housing chamber 21 has an inner peripheral surface centered on the first rotation shaft 50a (to be described later). The inner peripheral surface of the first rotor housing chamber 21 has a circular arc shape centered on the first rotation shaft 50a when viewed along the axial direction Z.

The second rotor housing chamber 22 is a part that houses the second rotor 60. The second rotor housing chamber 22 has an inner peripheral surface centered on the second rotation shaft 60a (to be described later). The inner peripheral surface of the second rotor housing chamber 22 has a circular arc shape centered on the second rotation shaft 60a when viewed along the axial direction Z. A space of the first rotor housing chamber 21 and a space of the second rotor housing chamber 22 (i.e., the rotor housing space of the rotor housing chamber 20) have a substantially eyeglass shape when viewed along the axial direction Z.

The inter-rotor-shaft upper chamber 30 increases an amount of the material that can be put into the kneading chamber 10a (e.g., a production amount by the kneading apparatus 1). The inter-rotor-shaft upper chamber 30 extends in the upward direction Y1 (here, the upward direction along the vertical direction) from the first rotor housing chamber 21 and the second rotor housing chamber 22. The inter-rotor-shaft upper chamber 30 is disposed in an inter-rotor-shaft region A. The inter-rotor-shaft region A is a region between the first rotation shaft 50a and the second rotation shaft 60a in the lateral direction X. The inter-rotor-shaft region A is a region located more toward the lateral second direction X2 than the first rotation shaft 50a and more toward the lateral first direction X1 than the second rotation shaft 60a. At least a part of the inter-rotor-shaft upper chamber 30 is disposed in the inter-rotor-shaft region A. A part of the inter-rotor-shaft upper chamber 30 may be disposed on the outside in the lateral direction X of the inter-rotor-shaft region A.

The inter-rotor-shaft upper chamber 30 has a shape that can be variously (arbitrarily) set. In the example illustrated in FIG. 1, an inner surface (referred to as a "left side surface") of the inter-rotor-shaft upper chamber 30 in the lateral first direction X1 extends in the upward direction Y1 from an upper part (e.g., an upper end) of the first rotor housing chamber 21. The left side surface of the inter-rotor-shaft upper chamber 30 extends in the upward direction Y1 from a position of the first rotor housing chamber 21, the position being directly above the first rotation shaft 50a. The left side surface of the inter-rotor-shaft upper chamber 30 is inclined with respect to the up-down direction Y so as to extend in the lateral second direction X2 as it goes in the upward direction Y1. The left side surface of the inter-rotor-shaft upper chamber 30 may extend in a direction coinciding with the up-down direction Y. An inner surface (right side surface) of the inter-rotor-shaft upper chamber 30 in the lateral second direction X2 may be provided symmetrically (e.g., laterally symmetrically) with respect to the left side surface of the inter-rotor-shaft upper chamber 30 in the lateral direction X, or may not be provided symmetrically.

The rotor 40 rotates with respect to the kneading chamber 10a to knead the material. The rotor 40 is disposed (housed) inside the kneading chamber 10a and is disposed (housed) in the rotor housing chamber 20. A plurality of the rotors 40 may be provided, for example, two rotors may be provided, or three or more rotors may be provided. Of the plurality of rotors 40, two adjacent rotors 40 are referred to as the first rotor 50 and the second rotor 60.

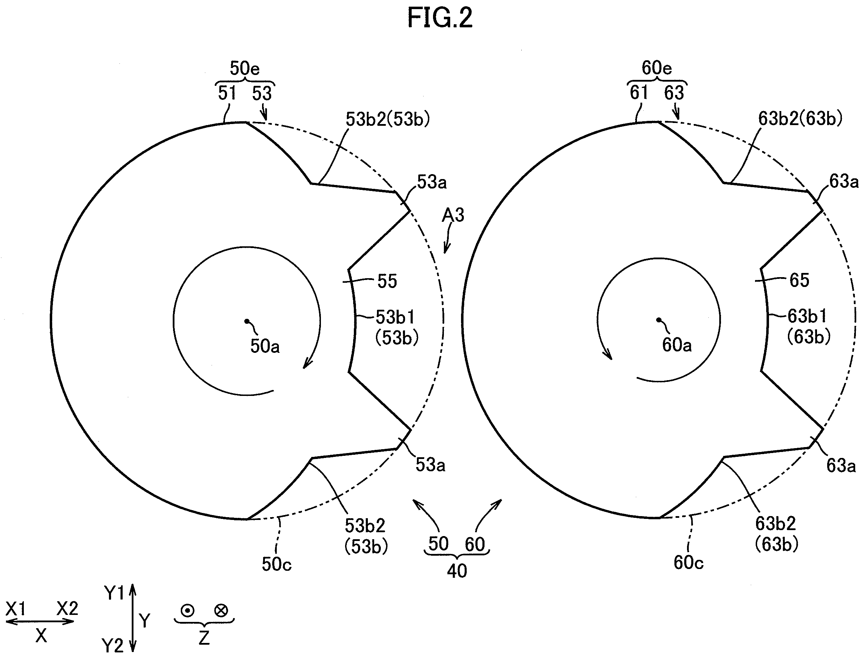

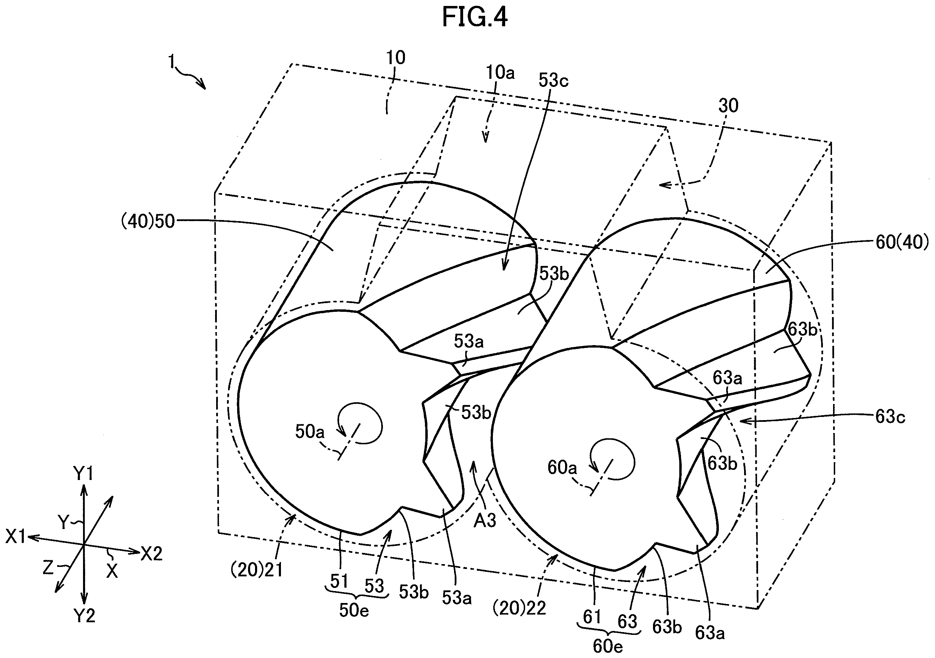

The first rotor 50 is one of the plurality of rotors 40. The first rotor 50 rotates about the first rotation shaft 50a. The first rotor 50 is disposed (housed) inside the kneading chamber 10a and is disposed (housed) in the first rotor housing chamber 21. As illustrated in FIG. 4, the first rotor 50 is provided to extend in a direction (the axial direction Z) in which the first rotation shaft 50a extends. In FIG. 4, the chamber 10 is indicated by an imaginary line (chain double-dashed line). As illustrated in FIG. 1, the first rotation shaft 50a is a rotation shaft of the first rotor 50 with respect to the kneading chamber 10a (with respect to the chamber 10). When viewed along the axial direction Z, a virtual circle passing through a first circular arc part 51 to be described later and centered on the first rotation shaft 50a is defined as the first virtual circle 50c. The first virtual circle 50c is a virtual circle orthogonal to the axial direction Z. The first rotor 50 includes a first outer peripheral part 50e. In a case where the first outer peripheral part 50e includes a first convex part 53a to be described later, the first rotor 50 includes a first base part 55 (see FIG. 2).

As illustrated in FIG. 2, the first outer peripheral part 50e is an outer peripheral part of a cross section (a cross section orthogonal to the axial direction Z) of the first rotor 50 as viewed along the axial direction Z. The first outer peripheral part 50e is a part around an outer side in the first radial direction of the cross section of the first rotor 50 as viewed along the axial direction Z. The first outer peripheral part 50e includes the first circular arc part 51 and a first non-circular arc part 53.

The first circular arc part 51 has a circular arc shape centered on the first rotation shaft 50a when viewed along the axial direction Z. The first circular arc part 51 is a part (maximum outer diameter part) disposed in an outermost part of the first rotor 50 in the first radial direction. The first circular arc part 51 has a function of applying high stress to the material (to be described later). The first circular arc part 51 is disposed along the first virtual circle 50c. The first circular arc part 51 continuously extends in the first circumferential direction by 1/3 or more of a length of an entire circumference of the first virtual circle 50c (details of a length of the first circular arc part 51 will be described later).

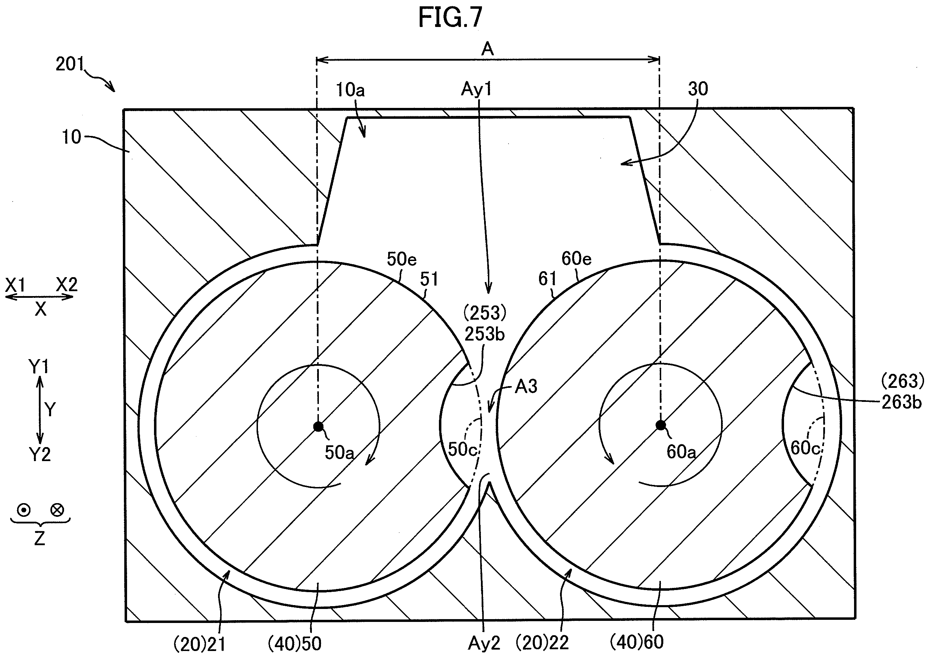

The first non-circular arc part 53 is a part of the first outer peripheral part 50e, the part being different from the first circular arc part 51 (the part other than the first circular arc part 51). A part of the first outer peripheral part 50e, the part being not the first circular arc part 51, is the first non-circular arc part 53. The first non-circular arc part 53 has a function of suppressing heat generation of the material (to be described later). The first non-circular arc part 53 can take various shapes (structures). The first non-circular arc part 53 may have only a concave shape (see, e.g., a first concave part 253b illustrated in FIG. 7). The first non-circular arc part 53 may have an uneven shape as in the example illustrated in FIG. 2. The first non-circular arc part 53 may have an airfoil shape (see, for example, a first convex part 53a). For example, the first non-circular arc part 53 includes the first convex part 53a, a first concave part 53b, and a first twisted part 53c (see FIG. 4).

The first convex part 53a is a part (protrusion, blade part) protruding outward in the first radial direction from the first base part 55. Only one first convex part 53a may be disposed, or a plurality of them may be disposed. In the example shown in FIG. 2, two first convex parts 53a are provided, and three or more of them may be provided. The first rotor 50 is a hybrid rotor having both the first base part 55 having a substantially columnar shape (substantially roll shape) and the first convex part 53a having an airfoil shape. In a case where a plurality of the first convex parts 53a are provided, the plurality of first convex parts 53a may have configurations equal to each other, substantially equal to each other, or different from each other. In the example illustrated in FIG. 2, the configurations of the two first convex parts 53a are symmetrical with each other in the first circumferential direction. A width of the first convex part 53a in the first circumferential direction may become narrower toward the outside in the first radial direction (may have a tapered shape), or may be constant.

The first concave part 53b is a part for more easily distributing the material (reducing unevenness of the material, reducing uneven mixing). The first concave part 53b is a part for taking in the material in a rotor gap upper part Ay1 (see FIG. 1) and moving the material to a rotor gap lower part Ay2 (see FIG. 1). The first concave part 53b has a shape recessed inward in the first radial direction (inward in a radial direction of the first rotor 50). The first concave part 53b is disposed on an inner side of the first virtual circle 50c in the first radial direction. The above "recessed shape" of the first concave part 53b is, for example, a groove shape (see FIG. 4). The first concave part 53b may include a straight line, may include a curve, and may include, for example, an arc shape (a circular arc shape or an arc shape that is not circular) when viewed along the axial direction Z. For example, the first concave part 53b includes a first inter-convex concave part 53b1 and a first inter-convex outer concave part 53b2.

The first inter-convex concave part 53b1 is formed by two first convex parts 53a adjacent to each other in the first circumferential direction. Here, in a case where the first rotor 50 has two first convex parts 53a, as a region between the two first convex parts 53a, there are provided a region with a shorter distance in the first circumferential direction and a region with a longer distance in the first circumferential direction. In this case, the first inter-convex concave part 53b1 is formed (disposed) in the region between the two first convex parts 53a with a shorter distance in the first circumferential direction.

The first inter-convex outer concave part 53b2 is disposed on the "outer side of the first convex parts" of the first convex part 53a. The above "outer side of the first convex parts" is a side opposite to the first inter-convex concave part 53b1 (opposite side in the first circumferential direction) with respect to the first convex part 53a. The first inter-convex outer concave part 53b2 is formed by the first convex part 53a. In the example shown in FIG. 2, the first inter-convex outer concave part 53b2 is disposed in a region between the first convex part 53a and the first circular arc part 51. The first inter-convex outer concave part 53b2 is provided on each of the outer sides of the two first convex parts 53a (two are provided in total).

The first twisted part 53c (see FIG. 4) is a part for distributing the material in the axial direction Z. The first twisted part 53c is a part for inducing a flow of the material in the axial direction Z and promoting the distribution of the material in the axial direction Z. As shown in FIG. 4, when the first rotor 50 is viewed along the radial direction, the first twisted part 53c has a shape twisted around the first rotation shaft 50a so as to extend in a direction inclined with respect to the first rotation shaft 50a. The first twisted part 53c has a shape twisted in a "predetermined twist direction" around the first rotation shaft 50a. In other words, a cross-sectional shape of the first twisted part 53c viewed along the axial direction Z is a shape that rotates in the "predetermined twist direction" as a position in the axial direction Z changes. The "predetermined twist direction" is a clockwise or counterclockwise direction when viewed from one side in the axial direction Z. Specifically, the first convex part 53a and the first concave part 53b have a spiral shape with the first rotation shaft 50a as a central axis. The first twisted part 53c is provided over the entire (or substantially the entire) of the first rotor 50 in the axial direction Z. The first twisted part 53c may be provided only in a part of the first rotor 50 in the axial direction Z.

As illustrated in FIG. 2, the first base part 55 is a part of the first rotor 50 excepting the first convex part 53a. The first base part 55 includes, for example, the first rotation shaft 50a.

As illustrated in FIG. 1, the second rotor 60 is one (the other) rotor among the plurality of rotors 40, and is provided separately from the first rotor 50. The second rotor 60 rotates about the second rotation shaft 60a. The second rotation shaft 60a is a rotation shaft of the second rotor 60 with respect to the kneading chamber 10a (with respect to the chamber 10). A virtual circle that passes through the second circular arc part 61 to be described later and is centered on the second rotation shaft 60a when viewed in the axial direction Z is defined as the second virtual circle 60c. The second virtual circle 60c is a virtual circle orthogonal to the axial direction Z.

The second rotor 60 rotates in a direction opposite to a rotation direction of the first rotor 50. Specifically, when the first rotor 50 rotates clockwise when viewed from one side in the axial direction Z, the second rotor 60 rotates counterclockwise. A magnitude (the number of rotations) of a rotation speed of the second rotor 60 is equal to or substantially equal to a magnitude of a rotation speed of the first rotor 50. Note that the magnitude of the rotation speed of the second rotor 60 may be different from the magnitude of the rotation speed of the first rotor 50.

The second rotor 60 is disposed (housed) inside the kneading chamber 10a and is disposed (housed) in the second rotor housing chamber 22. As illustrated in FIG. 4, the second rotor 60 is disposed in parallel with the first rotor 50. In detail, the direction in which the first rotation shaft 50a extends and the direction in which the second rotation shaft 60a extends are parallel to each other. As illustrated in FIG. 1, the second rotor 60 is disposed adjacent to the first rotor 50. The second rotor 60 is disposed so as to form a slight gap in the lateral direction X between the first virtual circle 50c and the second virtual circle 60c.

The configuration (structure, shape, etc.) of the second rotor 60 is equal to the configuration of the first rotor 50. Note that the configuration of the second rotor 60 may be different from the configuration of the first rotor 50.

The configuration of the second rotor 60 may be substantially equal to the configuration of the first rotor 50, or may be completely different from the configuration of the first rotor 50. In the following, description will be made of a case where the configuration of the first rotor 50 is equal to the configuration of the second rotor 60. As illustrated in FIG. 2, the second rotor 60 includes a second outer peripheral part 60e. In a case where the second outer peripheral part 60e includes a second convex part 63a, the second rotor 60 includes a second base part 65.

The second outer peripheral part 60e (corresponding to the first outer peripheral part 50e of the first rotor 50) is an outer peripheral part of a cross section of the second rotor 60 as viewed along the axial direction Z. The second outer peripheral part 60e includes the second circular arc part 61 and a second non-circular arc part 63.

The second circular arc part 61 (corresponding to the first circular arc part 51) has a circular arc shape centered on the second rotation shaft 60a when viewed from the axial direction Z. The second circular arc part 61 is a part (maximum outer diameter part) disposed in an outermost part of the second rotor 60 in the second radial direction. The second circular arc part 61 is disposed along the second virtual circle 60c. The second circular arc part 61 continuously extends in the second circumferential direction by 1/3 or more of a length of an entire circumference of the second virtual circle 60c (details will be described later). As shown in FIG. 1, when each rotor rotates, there comes timing at which the first non-circular arc part 53 and the second circular arc part 61 face each other between the first rotation shaft 50a and the second rotation shaft 60a (the inter-rotor-shaft region A) (details will be described later).

As illustrated in FIG. 2, the second non-circular arc part 63 (corresponding to the first non-circular arc part 53) is a part of the second outer peripheral part 60e different from the second circular arc part 61 (a part other than the second circular arc part 61). For example, the second non-circular arc part 63 includes the second convex part 63a, a second concave part 63b, and a second twisted part 63c (see FIG. 4) (corresponding to the first twisted part 53c). The second convex part 63a (corresponding to the first convex part 53a) is a part (protrusion, blade part) protruding outward in the second radial direction from the second base part 65. The second concave part 63b (corresponding to the first concave part 53b) has a shape recessed inward in the second radial direction, and is disposed on an inner side of the second virtual circle 60c in the second radial direction.

As shown in FIG. 4, the second twisted part 63c has a shape twisted in the "predetermined twist direction" around the second rotation shaft 60a. The "predetermined twist direction" is the same direction as the twist direction of the first twisted part 53c ("predetermined twist direction"). The second twisted part 63c is provided over the entire (or substantially the entire) of the second rotor 60 in the axial direction Z. Note that the second twisted part 63c may be provided only in a part of the second twisted part 63c in the axial direction Z.

(Action of Twisted Part)

The material is distributed in the axial direction Z by the first twisted part 53c and the second twisted part 63c. In detail, as described above, the first rotor 50 and the second rotor 60 rotate in opposite directions to each other. In addition, the first twisted part 53c and the second twisted part 63c are twisted in the same direction. Accordingly, a direction of movement of the material in the axial direction Z accompanying the rotation of the first rotor 50 and a direction of movement of the material in the axial direction Z accompanying the rotation of the second rotor 60 become opposite to each other. As a result, the material is easily distributed in the axial direction Z by the first twisted part 53c and the second twisted part 63c (distribution performance in the axial direction Z in the kneading apparatus 1 is improved).

Note that, when the first twisted part 53c and the second twisted part 63c are twisted in opposite directions, the direction of the movement of the material in the axial direction Z accompanying the rotation of the first rotor 50 and the direction of the movement of the material in the axial direction Z accompanying the rotation of the second rotor 60 are the same. In this case, since the material is biased to one side in the axial direction Z, the distribution in the axial direction Z may be insufficient. Here, a seal for closing the kneading chamber 10a is usually provided at an end of the rotor 40 in the axial direction Z in the kneading chamber 10a. When the material is biased to one side in the axial direction Z, the material pushes this seal with a large force, which may affect the seal. Therefore, the first twisted part 53c and the second twisted part 63c preferably twist in the same direction (predetermined twist direction).

The second base part 65 (see FIG. 2) (corresponding to the first base part 55) is a part of the second rotor 60 excepting the second convex part 63a.

(Operation)

The kneading apparatus 1 shown in FIG. 1 is configured to operate as follows. The material and the working fluid are confined in the sealed kneading chamber 10a. In this state, the rotor 40 rotates with respect to the kneading chamber 10a. The material moves from the rotor gap upper part Ay 1 to the rotor gap lower part Ay2, passes through a gap between an inner surface of the rotor housing chamber 20 and the rotor 40, and returns to the rotor gap upper part Ay 1. As the rotor 40 continues to rotate, the material repeats this movement. As a result, the material is distributed (distributed and mixed, and the distribution proceeds), and unevenness of the material (uneven mixing) is reduced. Specifically, unevenness of a sub-material in a main material is reduced. Also, the material is dispersed and the material is finely scattered.

Specifically, the sub-material of the material is finely scattered in the main material.

(Action by Using Working Fluid in Supercritical State or the Like)

Here, a closed kneader that does not use a working fluid in a supercritical state or the like is referred to as a "conventional closed kneader". When a working fluid in a supercritical state or the like is used, a material can be kneaded even at a low temperature as compared with a conventional closed kneader, and heat generation of the material can be suppressed. In addition, when a working fluid in a supercritical state or the like is used, viscosity of a material is reduced and fluidity of the material is improved as compared with a conventional closed kneader, so that the material is more easily distributed. In addition, since the viscosity of the material decreases and the fluidity of the material improves, power required for kneading a material in the kneading apparatus 1 decreases.

(Action of Circular Arc Part)

In a case where a working fluid in a supercritical state or the like is used, while fluidity of a material is improved as compared with a conventional closed kneader, stress applied to the material is reduced. Therefore, in a material that requires a physical force for dispersion (e.g., a filler having high cohesiveness), there is a possibility that dispersion is less likely to proceed (dispersibility is reduced).

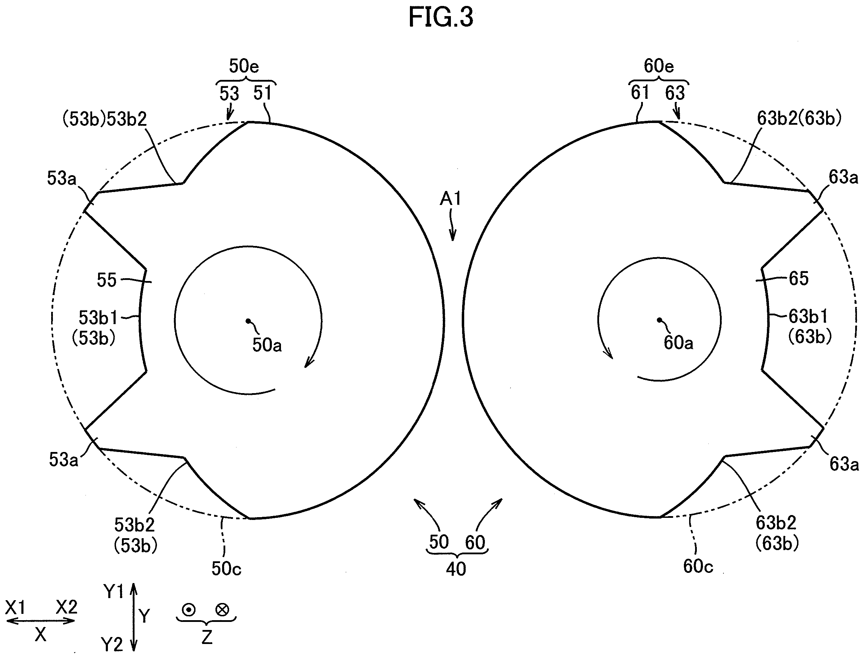

Therefore, the first rotor 50 includes the first circular arc part 51, and the second rotor 60 includes the second circular arc part 61. High stress can be applied to the material by the first circular arc part 51 and the second circular arc part 61. In detail, the material in the rotor gap upper part Ay 1 passes through a gap between the first rotor 50 and the second rotor 60. As illustrated in FIG. 3, a gap between the first circular arc part 51 and the second circular arc part 61 when the first circular arc part 51 and the second circular arc part 61 face each other is defined as a circular arc part gap A1. When the material passes through the circular arc part gap A1, an elongated flow in the up-down direction Y is generated in the material, and elongated stress is applied to the material (high stress acts on the material). As a result, the dispersibility of the material is improved.

(Action of Non-Circular Arc Part)

Although when the material is kneaded by the first circular arc part 51 and the second circular arc part 61, high stress can be applied to the material, heat generation of the material during kneading may become a problem. For example, heat generation of the material may become a problem in a case where the heat generation of the material causes chemical reactions of the material to occur too much (or lack). Specifically, for example, there is a process (B kneading process) of kneading a rubber material (main material) with a crosslinking agent (sub-material) such as sulfur or a vulcanization accelerator. In the B kneading process, when the heat generation of the material during kneading is too large, scorch (excessive progress of vulcanization) in which crosslinking proceeds during kneading is generated in the material, so that the material properties may be deteriorated.

Recombining the rotor 40 in order to suppress heat generation of this material takes time and cost for recombining. Specifically, when a rotor (a rotor that generates a large amount of heat) for kneading a material that requires a physical force for dispersion and a rotor (a rotor that generates a small amount of heat) for kneading a material whose heat generation is a problem are recombined, recombining takes time and cost.

(Opposition between First Non-Circular Arc Part 53 and Second Circular Arc Part 61) Therefore, the kneading apparatus 1 is configured to be able to apply high stress to a material and suppress heat generation of the material (enable kneading at a low temperature). Specifically, as shown in FIG. 1, the kneading apparatus 1 has timing at which the first non-circular arc part 53 and the second circular arc part 61 face each other (specifically, facing in the lateral direction X) between the first rotation shaft 50a and the second rotation shaft 60a (inter-rotor-shaft region A). Hereinafter, "facing" between an element of the first rotor 50 (here, the first non-circular arc part 53) and an element of the second rotor 60 (here, the second circular arc part 61) means facing each other in the lateral direction X in the inter-rotor-shaft region A. When the first non-circular arc part 53 and the second circular arc part 61 face each other, a range (vertical range) of the second circular arc part 61 in the up-down direction Y is included in at least a part of a vertical range of the first non-circular arc part 53.

The kneading apparatus 1 has timing at which the first circular arc part 51 and the second non-circular arc part 63 face each other in the inter-rotor-shaft region A (not shown). When the first circular arc part 51 and the second non-circular arc part 63 face each other, a range (vertical range) of the first circular arc part 51 in the up-down direction Y is included in at least a part of a vertical range of the second non-circular arc part 63. Hereinafter, unless otherwise specified, description regarding the first rotor 50 may be replaced with description regarding the second rotor 60, and the description regarding the second rotor 60 may be replaced with the description regarding the first rotor 50.

When the first non-circular arc part 53 and the second circular arc part 61 face each other, the material passes through a circular arc part and non-circular arc part gap A3. The circular arc part and non-circular arc part gap A3 is a gap between the first non-circular arc part 53 and the second circular arc part 61 when the first non-circular arc part 53 and the second circular arc part 61 face each other. The circular arc part and non-circular arc part gap A3 is larger than the circular arc part gap A1 (see FIG. 3). As a result, an amount of heat generated by the material when the material passes through the circular arc part and non-circular arc part gap A3 is smaller than an amount of heat generated by the material when the material passes through the circular arc part gap A1.

Circumferential lengths of the circular arc parts and the non-circular arc parts can be appropriately adjusted. As an example, in the mode shown in FIG. 2, the following states appear in order. In the state of FIG. 2, a central part in a rotation direction of the first non-circular arc part 53 and a central part in a rotation direction of the second circular arc part 61 face each other. When each rotor rotates 90 degrees from this state, an upstream end in the rotation direction of the first non-circular arc part 53 and an upstream end in the rotation direction of the second circular arc part 61 face each other. In other words, a downstream end in a rotation direction of the first circular arc part 51 and a downstream end in a rotation direction of the second non-circular arc part 63 face each other. When each rotor further rotates 90 degrees, a central part in the rotational direction of the first circular arc part 51 and a central part in the rotational direction of the second non-circular arc part 63 face each other. When each rotor further rotates 90 degrees, an upstream end in the rotation direction of the first circular arc part 51 and an upstream end in the rotation direction of the second non-circular arc part 63 face each other. In other words, a downstream end in the rotation direction of the first non-circular arc part 53 and a downstream end in the rotation direction of the second circular arc part 61 face each other. When each rotor further rotates 90 degrees, the state returns to the state of FIG. 2 again.

There may be timing at which the first non-circular arc part 53 and the second circular arc part 61 do not face each other. For example, the first non-circular arc part 53 and the second circular arc part 61 may face each other at certain timing and may not face each other at another timing. The first non-circular arc part 53 and the second circular arc part 61 may periodically face each other. For example, there may be timing at which the first non-circular arc part 53 and the second circular arc part 61 face each other while at least one of the first rotor 50 and the second rotor 60 makes one rotation.

In addition, at the timing when the first non-circular arc part 53 and the second circular arc part 61 face each other at a certain position in the axial direction Z, they may not face each other at another position in the axial direction Z.

(Relationship between Effect of Applying High Stress and Effect of Suppressing Heat Generation Amount)

A time period during which the first circular arc part 51 and the second circular arc part 61 face each other as shown in FIG. 3 is compared with a time period during which the first non-circular arc part 53 and the second circular arc part 61 face each other as shown in FIG. 2. Then, the longer the time period during which the first non-circular arc part 53 and the second circular arc part 61 face each other, the greater the effect of suppressing an amount of heat generation of the material (the effect of suppressing heat generation). On the other hand, as shown in FIG. 3, the longer the time during which the first circular arc part 51 and the second circular arc part 61 face each other, the greater the effect of applying high stress to the material (effect of applying high stress).

As illustrated in FIG. 4, the first rotor 50 may include the first twisted part 53c, and the second rotor 60 may include the second twisted part 63c. In this case, as shown in FIG. 2, the more the parts where the first non-circular arc part 53 and the second circular arc part 61 face each other in the axial direction Z, the more the effect of suppressing heat generation can be obtained. In addition, as shown in FIG. 3, the more the parts where the first circular arc part 51 and the second circular arc part 61 face each other in the axial direction Z, the more the effect of applying high stress can be obtained.

(Difference in Effect by Phase)

A balance between the effect of applying high stress and the effect of suppressing heat generation (low-temperature kneading) changes according to a difference in phase between the first rotor 50 and the second rotor 60. For example, as illustrated in FIG. 3, a phase in which the first circular arc part 51 and the second circular arc part 61 face each other in a right front direction and the first non-circular arc part 53 and the second non-circular arc part 63 face each other right in front (not illustrated) is referred to as a "normal phase". In addition, as illustrated in FIG. 2, a phase in which the first non-circular arc part 53 and the second circular arc part 61 face each other in a right front direction and the first circular arc part 51 and the second non-circular arc part 63 face each other right in front (not illustrated) is referred to as an "opposite phase". When the normal phase and the opposite phase are defined as described above, the closer the first rotor 50 and the second rotor 60 are to the normal phase (see FIG. 3), the greater the effect of applying high stress becomes, and the closer they are to the opposite phase (see FIG. 2), the greater the effect of suppressing heat generation becomes.

(Adjustment of Effect by Adjustment of Phase)

In kneading of a material or in a process requiring high stress, as shown in FIG. 3, it is preferable that the first rotor 50 and the second rotor 60 have the normal phase or a phase close to the normal phase. In kneading of a material or in a process that does not require high stress, as illustrated in FIG. 2, it is preferable that the first rotor 50 and the second rotor 60 have the opposite phases or a phase close to the opposite phase. By adjusting the phase in this manner, it is possible to achieve both the effect of applying high stress at the time of the normal phase (see FIG. 3) and the effect of suppressing heat generation at the time of the opposite phase (see FIG. 2) without recombination of the rotor 40.

(Specific Example of Difference in Effect Due to Phase)

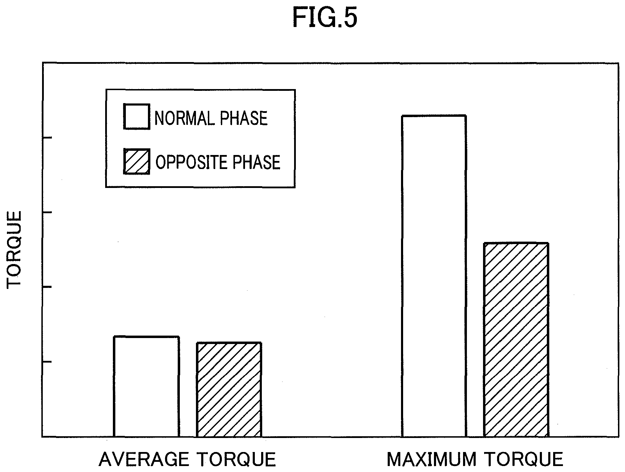

FIG. 5 shows an average torque and a maximum torque of the rotor 40 during kneading when the first rotor 50 and the second rotor 60 have the normal phase (see FIG. 3) and the opposite phases (see FIG. 2), respectively. In this specific example, the rotation speeds of the first rotor 50 and the second rotor 60 are equal to each other, and the rotation directions thereof are opposite to each other. In this specific example, as shown in FIG. 2, a cross-sectional shape of the first rotor 50 is equal to a cross-sectional shape of the second rotor 60 when viewed along the axial direction Z. In this specific example, a length of the first circular arc part 51 in the first circumferential direction is 1/2 of a circumference of the first virtual circle 50c, and a length of the first non-circular arc part 53 in the first circumferential direction is 1/2 of the circumference of the first virtual circle 50c.

In the result illustrated in FIG. 5, when the first rotor 50 and the second rotor 60 have the opposite phases (see FIG. 2), the average torque is reduced by about 6% and the maximum torque is reduced by about 40% as compared with the case of the normal phase (see FIG. 3). Here, a small torque of the rotor 40 (see FIG. 2) indicates that heat generation of the material is small. Therefore, it can be seen that the heat generation of the material at the time of kneading is suppressed by the circular arc part and the non-circular arc part facing each other (the first circular arc part 51 and the second non-circular arc part 63 face each other, and the second circular arc part 61 and the first non-circular arc part 53 face each other) in the opposite phases (see FIG. 2). A large torque of the rotor 40 (see FIG. 3) indicates that the stress applied to the material is high. Therefore, it can be seen that in the normal phase (see FIG. 3), facing each other of the circular arc parts (the first circular arc part 51 and the second circular arc part 61 face each other) enables high stress to be applied to the material during kneading.

(Difference in Effect Due to Shape of Rotor 40)

The balance between the effect of applying high stress and the effect of suppressing heat generation (low-temperature kneading) changes according to the length of the first circular arc part 51 in the first circumferential direction with respect to the length of the entire circumference of the first virtual circle 50c illustrated in FIG. 2. In addition, the balance between the effect of applying high stress and the effect of suppressing heat generation (low-temperature kneading) changes according to a length of the second circular arc part 61 in the first circumferential direction with respect to the length of the entire circumference of the second virtual circle 60c. Here, description will be made mainly focusing on the first rotor 50.

As described above, the longer the time during which the first non-circular arc part 53 and the second circular arc part 61 face each other with respect to the time during which the first circular arc part 51 and the second circular arc part 61 face each other, the greater the effect of suppressing heat generation. Therefore, in the first outer peripheral part 50e, by reducing the first circular arc part 51 that generates a large amount of heat and increasing the first non-circular arc part 53, the time during which the first non-circular arc part 53 and the second circular arc part 61 face each other becomes longer, thereby enhancing the effect of suppressing heat generation. However, when the first circular arc part 51 that generates a large amount of heat is excessively reduced, the effect of applying high stress is limited. When the first circular arc part 51 that generates a large amount of heat is excessively increased, heat generation during kneading becomes a problem. Therefore, in the first rotor 50, by adjusting (setting) the length of the first circular arc part 51 in the first circumferential direction with respect to the length of the entire circumference of the first virtual circle 50c to an appropriate length, it is possible to achieve both the effect of applying high stress and the effect of suppressing heat generation.

(Condition of Length of Circular Arc Part)

[Condition α1]

The first circular arc part 51 continuously extends in the first circumferential direction (the circumferential direction of the first rotor 50) by at least 1/3 or more of the length of the entire circumference of the first virtual circle 50c. In this case, the effect of applying high stress by the first circular arc part 51 can be secured. Even in a part of the first outer peripheral part 50e extending along the first virtual circle 50c, a part whose length in the first circumferential direction is not continuous by 1/3 or more of the length of the entire circumference of the first virtual circle 50c is not included in the first circular arc part 51. For example, in the example shown in FIG. 2, a distal end of the first convex part 53a is a part extending along the first virtual circle 50c. However, a length of the distal end of the first convex part 53a in the first circumferential direction is not continuous by 1/3 or more of the length of the entire circumference of the first virtual circle 50c. Therefore, the distal end of the first convex part 53a is not included in the first circular arc part 51.

The first rotor 50 is provided so as to extend in the axial direction Z (see FIG. 4), and the above [Condition α1] is satisfied at least at a part of positions in the axial direction Z (a position in the axial direction Z) of the first rotor 50. The above [Condition α1] may be satisfied by a part of the first rotor 50 in the axial direction Z. The above [Condition α1] is preferably satisfied by the entire first rotor 50 in the axial direction Z.

The second circular arc part 61 of the second rotor 60 satisfies the same condition as the above [Condition α1]. In other words, the second circular arc part 61 continuously extends in the first circumferential direction by at least 1/3 or more of the length of the entire circumference of the second virtual circle 60c.

[Condition α2]

The length of the first circular arc part 51, which is the length continuously extending in the first circumferential direction, is preferably 3/4 or less of the length of the entire circumference of the first virtual circle 50c. In this case, the length of the first non-circular arc part 53 in the first circumferential direction is longer than 1/4 of the length of the entire circumference of the first virtual circle 50c. Therefore, the effect of suppressing heat generation by the first non-circular arc part 53 can be secured. Note that "the length of the first non-circular arc part 53 in the first circumferential direction" is a length of the projected first non-circular arc part 53 in the first circumferential direction when the first non-circular arc part 53 is projected outward in the first radial direction onto the first virtual circle 50c.

The first rotor 50 is provided to extend in the axial direction Z (see FIG. 4), and the above [Condition α2] is preferably satisfied at at least a part of the positions in the axial direction Z of the first rotor 50.

The second circular arc part 61 of the second rotor 60 preferably satisfies the same condition as the above [Condition α2]. In other words, a length of the second circular arc part 61, which is a length continuously extending in the second circumferential direction, is preferably 3/4 or less of the length of the entire circumference of the second virtual circle 60c. When the first circular arc part 51 satisfies the above [Condition α2], the second circular arc part 61 preferably satisfies the same condition as the above [Condition α2]. When the first circular arc part 51 satisfies the above [Condition α2], the second circular arc part 61 may not satisfy the same condition as the above [Condition α2].

(Condition of Twist Angle)

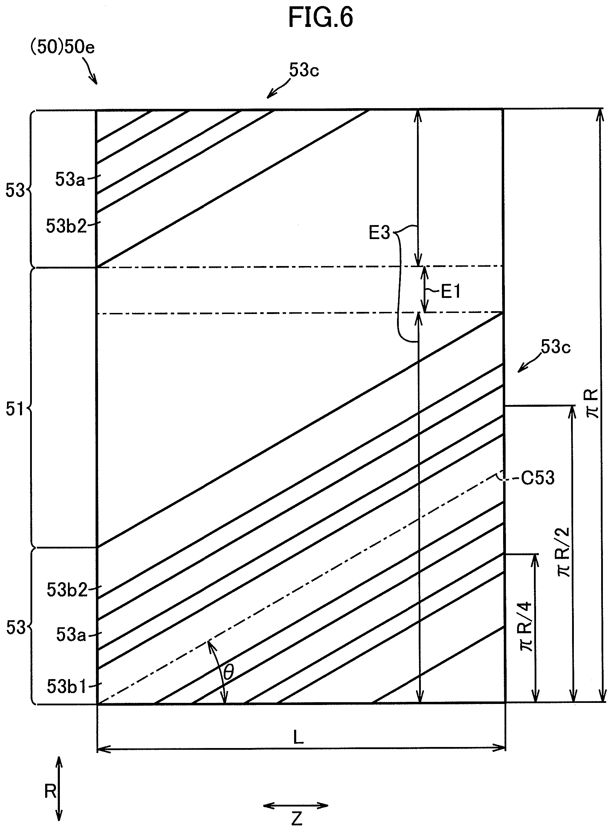

FIG. 6 is a developed view (of the first outer peripheral part 50e) of the first rotor 50. The developed view of the first rotor 50 is a view obtained by projecting the first outer peripheral part 50e onto a virtual cylinder (not illustrated) around the first rotor 50 illustrated in FIG. 2 and developing the virtual cylinder. In detail, a virtual cylinder having the first rotation shaft 50a as the center and having a cross section overlapping the first virtual circle 50c when viewed from the axial direction Z is defined as a virtual cylinder. The first outer peripheral part 50e is projected outward in the first radial direction onto the virtual cylinder. The virtual cylinder on which the first outer peripheral part 50e is projected is opened along a straight line on the outer peripheral surface of the virtual cylinder and extending in the axial direction Z to make a view as a plane. The plan view is a developed view of the first rotor 50 illustrated in FIG. 6.

A length of the first rotor 50 in the axial direction Z (direction in which the first rotation shaft 50a (see FIG. 4) extends) is defined as a first axial length L. A radius of the first virtual circle 50c (see FIG. 2) is defined as a first radius R. An angle formed by the axial direction Z and a direction in which the first non-circular arc part 53 extends (in detail, a direction in which a center line C53 of the first non-circular arc part 53 extends) is defined as a first twist angle 0. The center line C53 is a line connecting center positions of the first non-circular arc part 53 in the first circumferential direction (center positions of the first inter-convex concave part 53b1 in the first circumferential direction in the example illustrated in FIG. 2).

As the first twist angle θ increases, a region (circular arc part region E1) in the first circumferential direction where only the first circular arc part 51 exists decreases and a region (non-circular arc part region E3) in the first circumferential direction where the first non-circular arc part 53 exists increases. Therefore, the effect of suppressing heat generation is enhanced. On the other hand, as the first twist angle θ decreases, the non-circular arc part region E3 decreases and the arc part region E1 increases to enhance the effect of applying high stress.

Specifically, the first twist angle θ preferably satisfies the following Formula (1). The first twist angle 0 also preferably satisfies Formula (2). The first twist angle θ more preferably satisfies Formula (3). Formula (3) is an expression that satisfies both the conditions of Formula (1) and Formula (2).

$$\tan^{-1}(\pi R/4L) \leq \theta \cdots (1)$$

$$\theta \leq \tan^{-1}(\pi R/2L) \cdots (2)$$

$$\tan^{-1}(\pi R/4L) \leq \theta \leq \tan^{-1}(\pi R/2L) \cdots (3)$$

When Formula (1) is satisfied for the first twist angle θ, the non-circular arc part region E3 is secured. When Formula (1) is satisfied, in the developed view of the first rotor 50, a length (Ltanθ) of the center line C53 of the first non-circular arc part 53 in the first circumferential direction is πR/4 or more. In this case, the effect of suppressing heat generation can be obtained as compared with a case where the first twist angle θ does not satisfy Formula (1).

When Formula (2) is satisfied for the first twist angle 0, the circular arc part region E1 is secured. When Formula (2) is satisfied, in the developed view of the first rotor 50, a length (Ltanθ) of the center line C53 of the first non-circular arc part 53 in the first circumferential direction is πR/2 or less. In this case, the effect of applying high stress can be obtained as compared with a case where the first twist angle 0 does not satisfy Formula (2).

When Formula (3) is satisfied for the first twist angle 0, the circular arc part region E1 and the non-circular arc part region E3 are secured. When Formula (3) is satisfied, in the developed view of the first rotor 50, the length (Ltanθ) of the center line C53 of the first non-circular arc part 53 in the first circumferential direction is πR/4 or more and πR/2 or less. In this case, it is possible to achieve both the effect of suppressing heat generation and the effect of imparting high stress.

When the first rotor 50 (the first twist angle 0) satisfies Formula (1), Formula (2), or Formula (3), the second rotor 60 (see FIG. 2) preferably satisfies the same condition as the above-described Formula (1), Formula (2), or Formula (3). When the first rotor 50 (the first twist angle 0) satisfies Formula (1), Formula (2), or Formula (3), the second rotor 60 may not satisfy the above Formula (1), Formula (2), or Formula (3).

The effects of the kneading apparatus 1 illustrated in FIG. 1 are as follows. The kneading apparatus 1 includes the kneading chamber 10a, the first rotor 50, and the second rotor 60. The kneading chamber 10a is a part for kneading a material in the presence of a working fluid in the supercritical state or the subcritical state. The first rotor 50 is disposed inside the kneading chamber 10a and rotates about the first rotation shaft 50a. The second rotor 60 is disposed inside the kneading chamber 10a, disposed parallel to the first rotor 50, disposed so as to be adjacent to the first rotor 50, and rotates about the second rotation shaft 60a in a direction opposite to the rotation direction of the first rotor 50.

[Configuration 1-1]

The first rotor 50 includes a first outer peripheral part 50e. The first outer peripheral part 50e is an outer peripheral part of the cross section of the first rotor 50 as viewed from the direction (axial direction Z) in which the first rotation shaft 50a extends. The first outer peripheral part 50e includes the first circular arc part 51 and a first non-circular arc part 53. The first non-circular arc part 53 is a part of the first outer peripheral part 50e different from the first circular arc part 51. The virtual circle passing through the first circular arc part 51 and centered on the first rotation shaft 50a when viewed along the direction (axial direction Z) in which the first rotation shaft 50a extends is defined as the first virtual circle 50c.

[Configuration 1-2]

The first circular arc part 51 has a circular arc shape centered on the first rotation shaft 50a, and is disposed in the outermost part of the first rotor 50 in the radial direction.

[Configuration 1-3]

The first circular arc part 51 continuously extends in the circumferential direction (first circumferential direction) of the first rotor 50 by 1/3 or more of the length of the entire circumference of the first virtual circle 50c.

[Configuration 1-4]

The second rotor 60 includes the second outer peripheral part 60e. The second outer peripheral part 60e is an outer peripheral part of the cross section of the second rotor 60 as viewed from the direction (axial direction Z) in which the second rotation shaft 60a extends. The second outer peripheral part 60e includes the second circular arc part 61 and a second non-circular arc part 63. The second non-circular arc part 63 is a part of the second outer peripheral part 60e different from the second circular arc part 61. The virtual circle passing through the second circular arc part 61 and centered on the second rotation shaft 60a when viewed from the direction (axial direction Z) in which the second rotation shaft 60a extends is defined as the second virtual circle 60c.

[Configuration 1-5]

The second circular arc part 61 has a circular arc shape centered on the second rotation shaft 60a, and is disposed in an outermost part of the second rotor 60 in the radial direction.

[Configuration 1-6]

The second circular arc part 61 continuously extends in the circumferential direction (second circumferential direction) of the second rotor 60 by 1/3 or more of the length of the entire circumference of the second virtual circle 60c.

[Configuration 1-7]

There is timing at which the first non-circular arc part 53 and the second circular arc part 61 face each other between the first rotation shaft 50a and the second rotation shaft 60a (inter-rotor-shaft region A).
According to [Configuration 1-2] and [Configuration 1-5] described above, as shown in FIG. 3, the gap (circular arc part gap A1) between the first circular arc part 51 and the second circular arc part 61 tends to be narrow when the first circular arc part 51 and the second circular arc part 61 face each other. In addition, in [Configuration 1-3] and [Configuration 1-6] described above, the lengths of the first circular arc part 51 and the second circular arc part 61 are secured. Therefore, when the first circular arc part 51 and the second circular arc part 61 face each other, high stress can be applied to the material when the material passes through the circular arc part gap A1. Therefore, the first rotor 50 and the second rotor 60 can apply high stress to the material.

The following effects can be obtained by [Configuration 1-7] described above. As shown in FIG. 1, the gap (circular arc part and non-circular arc part gap A3) between the second circular arc part 61 and the first non-circular arc part 53 when the second circular arc part 61 and the first non-circular arc part 53 face each other is wider than the above-described circular arc part gap A1 (see FIG. 3). Therefore, when the material passes through the circular arc part and non-circular arc part gap A3, heat generation of the material can be suppressed.

Therefore, the kneading apparatus 1 can suppress heat generation of the material in the rotor 40 (the first rotor 50 and the second rotor 60) that can apply high stress to the material.

As shown in FIG. 4, the first non-circular arc part 53 has a shape (first twisted part 53c) twisted about the first rotation shaft 50a so as to extend in a direction inclined with respect to the first rotation shaft 50a. As shown in FIG. 6, the length of the first rotor 50 in the direction (axial direction Z) in which the first rotation shaft 50a extends is defined as the first axial length L. The radius of the first virtual circle 50c (see FIG. 1) is defined as the first radius R. The angle formed by the direction (axial direction Z) in which the first rotation shaft 50a extends and the direction in which the first non-circular arc part 53 extends is defined as the first twist angle $\theta$. At this time, the following Formula is satisfied.

[Configuration 2]

$$\tan^{-1}\left(\pi R/4L\right) \le \theta \le \tan^{-1}\left(\pi R/2L\right)$$

According to [Configuration 2] described above, it is possible in the first outer peripheral part 50e to secure each of the region (the circular arc part region E1) in the first circumferential direction where only the first circular arc part 51 exists and the region (the non-circular arc part region E3) in the first circumferential direction where the first non-circular arc part 53 exists. Therefore, the effect of applying high stress to the material and the effect of suppressing heat generation of the material can be obtained in a well-balanced manner.

[Configuration 3]

As shown in FIG. 1, the length of the first circular arc part 51, which is the length continuously extending in the circumferential direction (first circumferential direction) of the first rotor 50, is 3/4 or less of the length of the entire circumference of the first virtual circle 50c.
The following effect can be obtained by the above [Configuration 3]. In [Configuration 1-3] described above, the first circular arc part 51 continuously extends in the first circumferential direction by 1/3 or more of the length of the entire circumference of the first virtual circle 50c. When the first circular arc part 51 is too long, the first non-circular arc part 53 becomes too small, so that the effect of suppressing heat generation of the material is limited. Therefore, in [Configuration 3] described above, the length of the first circular arc part 51 continuously extending in the first circumferential direction is 3/4 or less of the length of the entire circumference of the first virtual circle 50c. Therefore, the size of the first non-circular arc part 53 can be secured. Therefore, the effect of suppressing heat generation of the material can be secured.

(Second Embodiment)

With reference to FIG. 7, a kneading apparatus 201 according to a second embodiment will be described with respect to differences from the first embodiment. In the kneading apparatus 201 according to the second embodiment, description of points common to the first embodiment will be omitted.

In the example shown in FIG. 2, the first non-circular arc part 53 includes the first convex part 53a and the first concave part 53b. On the other hand, as shown in FIG. 7, a first non-circular arc part 253 includes a first concave part 253b and may not include the first convex part 53a (see FIG. 2). Similarly to the first rotor 50, also in the second rotor 60, a second non-circular arc part 263 includes a second concave part 263b and may not include the second convex part 63a (see FIG. 2).

The first concave part 253b may have any shape (the same applies to the second concave part 263b). In the example shown in FIG. 9, the first concave part 253b has an arc shape recessed inward in the first radial direction, a circular arc shape or a substantially arc shape.

(Modifications)

The above embodiments may be variously modified. For example, components of the embodiments different from each other (including modifications) may be combined. For example, modifications of the above embodiments may be variously combined. For example, the number of the components in the above embodiments (including modifications) may be changed, and some of the components do not have to be provided. For example, the arrangement of the components may be changed. For example, an inclusion relationship of the components may be variously changed. For example, a component described as a lower component included in a certain higher component is not required to be included in the higher component, and may be included in another component. For example, a plurality of members and parts described as those different from each other may be as one member or one part. For example, what has been described as one member or part may be divided and provided as a plurality of members or parts different from each other. For example, the components each may have only some of the characteristics (such as operating function, arrangement, shape, and operation).

Specifically, for example, the first rotor 50 illustrated in FIG. 2 may include only one first convex part 53a. In addition, for example, the first rotor 50 may include two first non-circular arc parts 53 (at two positions).

Also in another embodiment, the kneading apparatus 1 may be switchable between rotor arrangement in FIG. 2 and rotor arrangement in FIG. 3. Specifically, in the kneading apparatus 1, relative rotational phases of the first rotor 50 and the second rotor 60 are set to be switchable between first rotor arrangement (FIG. 2) in which the first rotor 50 and the second rotor 60 rotate such that the first non-circular arc part 53 and the second circular arc part 61 face each other between the first rotation shaft 50a and the second rotation shaft 60a at predetermined timing, and second rotor arrangement (FIG. 3) in which the first rotor 50 and the second rotor 60 rotate such that the first circular arc part 51 and the second circular arc part 61 face each other between the first rotation shaft 50a and the second rotation shaft 60a at predetermined timing. As an example, after a part (gear or the like) of a drive transmission path of at least one of the first rotor 50 and the second rotor 60 is temporarily detached and one rotor is rotated 180 degrees about the axis, the drive transmission path is restored, so that the rotor arrangement can be switched. As a result, the phase can be adjusted according to a material to be kneaded and a situation of the process. The effect in each phase (rotor arrangement) is the same as described above.

A kneading apparatus according to a first aspect of the present invention includes: a kneading chamber that houses a material together with a working fluid in a supercritical state or a subcritical state in order to knead the material; a first rotor that is disposed inside the kneading chamber and rotates about a first rotation shaft; and a second rotor that is disposed inside the kneading chamber, is disposed in parallel with the first rotor and adjacent to the first rotor, and rotates about a second rotation shaft in a direction opposite to a rotation direction of the first rotor. The first rotor includes a first outer peripheral part constituting an outer peripheral part of the first rotor in a cross section of the first rotor orthogonal to a direction in which the first rotation shaft extends, the first outer peripheral part having: a first circular arc part; and a first non-circular arc part being a part of the first outer peripheral part different from the first circular arc part. When a virtual circle passing through the first circular arc part and centered on the first rotation shaft when viewed along the direction in which the first rotation shaft extends is defined as a first virtual circle, the first circular arc part has a circular arc shape centered on the first rotation shaft, is disposed on an outermost side in a radial direction of the first rotor, and continuously extends in a circumferential direction of the first rotor by 1/3 or more of a length of an entire circumference of the first virtual circle. The second rotor includes a second outer peripheral part constituting an outer peripheral part of the second rotor in a cross section of the second rotor orthogonal to a direction in which the second rotation shaft extends, the second outer peripheral part having: a second circular arc part; and a second non-circular arc part being a part of the second outer peripheral part different from the second circular arc part. When a virtual circle passing through the second circular arc part and centered on the second rotation shaft when viewed along the direction in which the second rotation shaft extends is defined as a second virtual circle, the second circular arc part has a circular arc shape centered on the second rotation shaft, is disposed on an outermost side in a radial direction of the second rotor, and continuously extends in a circumferential direction of the second rotor by 1/3 or more of a length of an entire circumference of the second virtual circle, and the first rotor and the second rotor rotate at predetermined timing such that the first non-circular arc part and the second circular arc part face each other between the first rotation shaft and the second rotation shaft.

A kneading apparatus according to a second aspect of the present invention is the kneading apparatus according to the first aspect, when the first rotor is viewed along the radial direction, the first non-circular arc part has a shape twisted about the first rotation shaft so as to extend in a direction inclined with respect to the first rotation shaft, and when a length of the first rotor in the direction in which the first rotation shaft extends is defined as a first axial length L, a radius of the first virtual circle is defined as a first radius R, and an angle formed by the direction in which the first rotation shaft extends and a direction in which the first non-circular arc part extends is defined as a first twist angle $\theta$, $\tan^{-1}(\pi R/4L) \leq \theta \leq \tan^{-1}(\pi R/2L)$ is satisfied.

A kneading apparatus according to a third aspect of the present invention is the kneading apparatus according to the first or second aspect, in which a length of the first circular arc part, the length continuously extending in the circumferential direction of the first rotor, is 3/4 or less of the length of the entire circumference of the first virtual circle.

A kneading apparatus according to a fourth aspect of the present invention is the kneading apparatus according to the first to third aspects, in which relative rotational phases of the first rotor and the second rotor are set to be switchable between first rotor arrangement in which the first rotor and the second rotor rotate such that the first non-circular arc part and the second circular arc part face each other between the first rotation shaft and the second rotation shaft at predetermined timing, and second rotor arrangement in which the first rotor and the second rotor rotate such that the first circular arc part and the second circular arc part face each other between the first rotation shaft and the second rotation shaft at predetermined timing.

**Claims**

1. A kneading apparatus comprising:

   a kneading chamber that houses a material together with a working fluid in a supercritical state or a subcritical state in order to knead the material;
   a first rotor that is disposed inside the kneading chamber and rotates about a first rotation shaft; and
   a second rotor that is disposed inside the kneading chamber, is disposed in parallel with the first rotor and adjacent to the first rotor, and rotates about a second rotation shaft in a direction opposite to a rotation direction of the first rotor,
   wherein the first rotor includes a first outer peripheral part constituting an outer peripheral part of the first rotor in a cross section of the first rotor orthogonal to a direction in which the first rotation shaft extends,
   the first outer peripheral part having:

      a first circular arc part; and
      a first non-circular arc part being a part of the first outer peripheral part different from the first circular arc part,

   when a virtual circle passing through the first circular arc part and centered on the first rotation shaft when viewed along the direction in which the first rotation shaft extends is defined as a first virtual circle,
   the first circular arc part having a circular arc shape centered on the first rotation shaft, being disposed on an outermost side in a radial direction of the first rotor, and continuously extending in a circumferential direction of the first rotor by 1/3 or more of a length of an entire circumference of the first virtual circle,
   wherein the second rotor includes a second outer peripheral part constituting an outer peripheral part of the second rotor in a cross section of the second rotor orthogonal to a direction in which the second rotation shaft extends,
   the second outer peripheral part having:

      a second circular arc part; and
      a second non-circular arc part being a part of the second outer peripheral part different from the second circular arc part,

   when a virtual circle passing through the second circular arc part and centered on the second rotation shaft when viewed along the direction in which the second rotation shaft extends is defined as a second virtual circle,

the second circular arc part having a circular arc shape centered on the second rotation shaft, being disposed on an outermost side in a radial direction of the second rotor, and continuously extending in a circumferential direction of the second rotor by 1/3 or more of a length of an entire circumference of the second virtual circle, and

wherein the first rotor and the second rotor rotate at predetermined timing such that the first non-circular arc part and the second circular arc part face each other between the first rotation shaft and the second rotation shaft.

2. The kneading apparatus according to claim 1,

wherein when the first rotor is viewed along the radial direction, the first non-circular arc part has a shape twisted about the first rotation shaft so as to extend in a direction inclined with respect to the first rotation shaft, and

when a length of the first rotor in the direction in which the first rotation shaft extends is defined as a first axial length L,

a radius of the first virtual circle is defined as a first radius R, and

an angle formed by the direction in which the first rotation shaft extends and a direction in which the first non-circular arc part extends is defined as a first twist angle $\theta$, $\tan^{-1}(\pi R/4L) \leq \theta \leq \tan^{-1}(\pi R/2L)$ is satisfied.

3. The kneading apparatus according to claim 1 or 2, wherein
a length of the first circular arc part, the length continuously extending in the circumferential direction of the first rotor, is 3/4 or less of the length of the entire circumference of the first virtual circle.

4. The kneading apparatus according to claim 1 or 2, wherein
relative rotational phases of the first rotor and the second rotor are set to be switchable between first rotor arrangement in which the first rotor and the second rotor rotate such that the first non-circular arc part and the second circular arc part face each other between the first rotation shaft and the second rotation shaft at predetermined timing, and second rotor arrangement in which the first rotor and the second rotor rotate such that the first circular arc part and the second circular arc part face each other between the first rotation shaft and the second rotation shaft at predetermined timing.

# FIG.1

EP 4 775 301 A1

# FIG.2

EP 4 775 301 A1

FIG.3

FIG.4

# FIG.5

## FIG.6

# FIG.7

EP 4 775 301 A1

## INTERNATIONAL SEARCH REPORT

| International application No. |
|---|
| **PCT/JP2024/038139** |

**A.    CLASSIFICATION OF SUBJECT MATTER**

*B01F 27/2322*(2022.01)i; *B01F 27/1144*(2022.01)i; *B01F 33/70*(2022.01)i; *B29B 7/46*(2006.01)i
FI:    B01F27/2322; B01F33/70; B01F27/1144; B29B7/46

According to International Patent Classification (IPC) or to both national classification and IPC

**B.    FIELDS SEARCHED**

Minimum documentation searched (classification system followed by classification symbols)

B01F27/2322; B01F27/1144; B01F33/70; B29B7/46

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2019-84763 A (KABUSHIKI KAISHA KOBE SEIKO SHO) 06 June 2019 (2019-06-06) | 1-4 |
| A | JP 2020-168755 A (KABUSHIKI KAISHA KOBE SEIKO SHO) 15 October 2020 (2020-10-15) | 1-4 |
| A | WO 2005/030845 A1 (UCHIYAMA, Kosuke) 07 April 2005 (2005-04-07) | 1-4 |
| A | JP 1-502250 A (ALBERS, August) 10 August 1989 (1989-08-10) | 1-4 |
| A | JP 46-1993 A (NATIONAL RESEARCH DEVELOPMENT CORPORATION) 07 October 1971 (1971-10-07) | 1-4 |
| A | JP 4-104827 A (MITSUBISHI HEAVY INDUSTRIES, LTD.) 07 April 1992 (1992-04-07) | 1-4 |
| A | JP 1-307436 A (FARREL CORP.) 12 December 1989 (1989-12-12) | 1-4 |
| A | JP 5-278026 A (SUMITOMO HEAVY INDUSTRIES, LTD.) 26 October 1993 (1993-10-26) | 1-4 |

☑ Further documents are listed in the continuation of Box C.          ☑ See patent family annex.

|   |   |   |   |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 January 2025** | **21 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/038139** |

| C. | DOCUMENTS CONSIDERED TO BE RELEVANT | |
| --- | --- | --- |
| Category* | Citation of document, with indication, where appropriate, of the relevant passages | Relevant to claim No. |
| P, X | WO 2024/203440 A1 (KABUSHIKI KAISHA KOBE SEIKO SHO) 03 October 2024 (2024-10-03) | 1, 3 |
| P, A | | 2, 4 |

Form PCT/ISA/210 (second sheet) (July 2022)

### INTERNATIONAL SEARCH REPORT
**Information on patent family members**

International application No.

**PCT/JP2024/038139**

| Patent document cited in search report | | | Publication date (day/month/year) | Patent family member(s) | | | Publication date (day/month/year) |
|---|---|---|---|---|---|---|---|
| JP | 2019-84763 | A | 06 June 2019 | (Family: none) | | | |
| JP | 2020-168755 | A | 15 October 2020 | WO | 2020/203060 | A1 | |
| WO | 2005/030845 | A1 | 07 April 2005 | US | 2007/0148320 | A1 | |
| | | | | EP | 1674502 | A1 | |
| | | | | CN | 1886446 | A | |
| JP | 1-502250 | A | 10 August 1989 | WO | 1988/006085 | A1 | |
| | | | | DE | 3704108 | A1 | |
| JP | 46-1993 | A | 07 October 1971 | (Family: none) | | | |
| JP | 4-104827 | A | 07 April 1992 | (Family: none) | | | |
| JP | 1-307436 | A | 12 December 1989 | US | 4834543 | A | |
| | | | | EP | 340888 | A1 | |
| | | | | CN | 1037846 | A | |
| JP | 5-278026 | A | 26 October 1993 | (Family: none) | | | |
| WO | 2024/203440 | A1 | 03 October 2024 | (Family: none) | | | |

Form PCT/ISA/210 (patent family annex) (July 2022)

**EP 4 775 301 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4542605 B